Europäisches Patentamt

European Patent Office

Office européen des brevets

(19)

(11) Veröffentlichungsnummer: **0 063 737**
**B1**

(12) **EUROPÄISCHE PATENTSCHRIFT**

(45) Veröffentlichungstag der Patentschrift:
19.03.86

(21) Anmeldenummer: 82103095.4

(22) Anmeldetag: 10.04.82

(51) Int. Cl.⁴: **H 04 N 5/92, H 04 N 9/82**

(54) Videorecorder mit verbesserter Tonwiedergabe.

(30) Priorität: 23.04.81 DE 3116130
05.06.81 DE 3122415

(43) Veröffentlichungstag der Anmeldung:
03.11.82 Patentblatt 82/44

(45) Bekanntmachung des Hinweises auf die Patenterteilung:
19.03.86 Patentblatt 86/12

(84) Benannte Vertragsstaaten:
AT BE CH DE FR GB IT LI LU NL SE

(56) Entgegenhaltungen:
DE - A - 2 201 691
DE - B - 1 277 900
US - A - 3 346 702

(73) Patentinhaber: TELEFUNKEN Fernseh und Rundfunk
GmbH, Göttinger Chaussee 76, D-3000 Hannover 91 (DE)

(72) Erfinder: Kluth, Hans-Jürgen, Ing. grad.,
Gartenstrasse 14, D-3008 Garbsen 8 (DE)

(74) Vertreter: Einsel, Robert, Dipl.-Ing., TELEFUNKEN
Fernseh und Rundfunk GmbH Göttinger Chaussee 76,
D-3000 Hannover 91 (DE)

## Beschreibung

Bei Videorecordern ist es bekannt das Videosignal durch Frequenzmodulation eines Bildträgers auf sogenannten Schrägspuren aufzuzeichnen, die unter einem Winkel von ca. 6° schräg zur Längsrichtung des Bandes verlaufen. Dabei ist vorzugsweise entlang einer derartigen Schrägspur jeweils ein Halbbild aufgezeichnet. Aufzeichnung und Abtastung erfolgen mit zwei Köpfen, die jeweils abwechselnd die Schrägspuren abtasten.

Bei derartigen Geräten wird das Tonsignal auf einer parallel zur Bandkante verlaufenden Längsspur mit einer Breite von etwa 1 mm mit einem feststehenden Kopf aufgezeichnet und abgetastet. Für die Aufzeichnung und Abtastung des Tonsignals ist also die Längsgeschwindigkeit des Bandes und nicht die wesentlich höhere Relativgeschwindigkeit zwischen Kopf und Band auf den Schrägspuren entscheidend. Die Längsgeschwindigkeit des Bandes ist in der Praxis zur Vergrößerung der Gesamtspieldauer eines Bandes auf Werte in der Größenordnung von 2 cm/s verringert worden. Diese geringe Relativgeschwindigkeit zwischen dem Band und dem Tonkopf hat einen nachteiligen Einfluß auf die Qualität des aufgezeichneten Tonsignals. Eine Hifi Qualität läßt sich bei dieser geringen Relativgeschwindigkeit praktisch nicht mehr erreichen. Das aufgezeichnete Tonsignal hat nur noch eine Bandbreite von etwa 70 Hz bis 7-10 KHz. Wegen der geringen Breite der Längsspur ergibt sich auch ein relativ schlechter Störabstand. Dieser wird bei der Aufzeichnung von zwei Tonsignalen für Stereo-Wiedergabe durch die dann notwendige Halbierung der Breite der Längsspur noch schlechter.

Es ist bekannt (DE-PS 1277900) das Tonsignal zusammen mit dem Bildträger auf den Schrägspuren aufzuzeichnen. Eine solche Lösung konnte jedoch in der Praxis bisher nicht erfolgreich realisiert werden. Einerseits ist der verfügbare Frequenzbereich bereits voll ausgenutzt. Der Bereich von etwa 0-1,3 MHz wird von dem in der Frequenz herabgesetzten quadraturmodulierten Farbträger und der Rest des Frequenzbereiches durch das Frequenzspektrum des modulierten Bildträgers eingenommen. Eine Aufzeichnung eines Tonträgers in der noch vorhandenen schmalen Frequenzlücke zwischen dem modulierten Farbträger und dem Frequenzspektrum des Bildträgers ist durch die notwendigen steilen Filterflanken für den Farbträger und den Bildträger wegen der auftretenden Phasen- und Gruppenlaufzeitfehler praktisch nicht möglich Andererseits entsteht bei der Aufzeichnung des Tonsignals auf den Schrägspuren bei der wiedergabe eine beträchtliche Störung durch den Kopfwechsel. Bei der Bildwiedergabe stört der Kopfwechsel nicht, weil er während der Vertikalaustastlücke erfolgt. Bei der wiedergabe des Tonsignals wird jedoch dieser Kopfwechsel als störendes Geräusch hörbar, weil durch den Kopfwechsel die Abtastung des z.B. einem Träger aufmodulierten Tonsignals vom Band jeweils mit 50 Hz kurzzeitig unterbrochen ist. Die dadurch entstehenden nadelförmigen Störimpulse mit einer Grundfrequenz von 50 Hz und einem großen Anteil an Oberwellen erzeugen bei der Tonwiedergabe ein kontinuierliches Störgerausch.

Der Erfindung liegt die Aufgabe zugrunde bei derAufzeichnung des Tonsignals durch FM eines Tonträgers auf den Schrägspuren die durch den Kopfwechsel auftretende Störung im Ton zu verringern.

Diese Aufgabe wird durch die im Anspruch 1 beschriebene Erfindung gelöst. Vorteilhafte weiterbildungen der Erfindung sind in den Unteransprüchen beschrieben.

Bei der Erfindung wird also der Einbruch in der Amplitude des Tonträgers, der durch den Kopfwechsel entstehen kann, dadurch beseitigt, daß der zur Verstärkung des Tonträgers vorgesehene selektive Verstärker während dieser Zeit absichtlich zum Schwingen angeregt wird. Der Einbruch in der Amplitude des Tonträgers wird dann mit Sicherheit durch einen Träger ausgefüllt, dessen Frequenz einen wert hat, der auch im normalen Betrieb im modulierten Tonträger auftritt. Der schaltungstechnische Aufwand ist gering, weil ein selektiver Verstärker für den Tonträger ohnehin für die Verstärkung benötigt wird und lediglich durch den Tastimpuls für die Verstärkung dieses Verstärkers periodisch erhöht zu werden braucht. Eine derartige Erhöhung der Verstärkung ist z.B. durch periodische Verringerung der im allgemeinen in einem Verstärker vorhandenen Gegenkopplung möglich. Durch die Erfindung kann, wie Versuche ergeben haben, die Störung im Tonsignal um 20 dB, d.h. auf etwa 10 % verringert werden.

Die Kurvenform des die Verstärkung erhöhenden Tastimpuls ist vorzugsweise so gehwählt, daß sie einen kontinuierlichen Verlauf ohne Amplitudensprünge hat, z.B. dreieckförmig. Dann wird die Verstärkung des Verstärkers kontinuierlich erhöht bis auf einen Maximalwert etwa in der Mitte des Kopfwechsels und dann wieder kontinuierlich bis auf den normalen Verstärkerbetrieb abgesenkt. Durch diese kontinuierliche Anderung der Verstärkung können unerhünschte Ein- und Ausschwingvorgänge und Störungen des Nutzsignals vermieden werden.

Etwaige Amplitudenerhöhungen des modulierten Tonträgers während des Kopfwechsels durch die Erhöhung der Verstärkung werden durch die in den FM-Demodulatoren im allgemeinen enthaltenen Amplitudenbegrenzer wieder ausgeglichen.

Ein Ausführungsbeispiel der Erfindung wird anhand der Zeichnung erläutert. Darin zeigen
Figur 1 ein Frequenzspektrum für die Aufzeichnung der einzelnen Signale auf dem Magnetband,
Figur 2 ein Blockschaltbild für die erfindungsgemäße Lösung,
Figur 3 Kurven zur Erläuterung der Wirkungsweise und

Figur 4 ein Schaltungsbeispiel für den selektiven Verstärker und

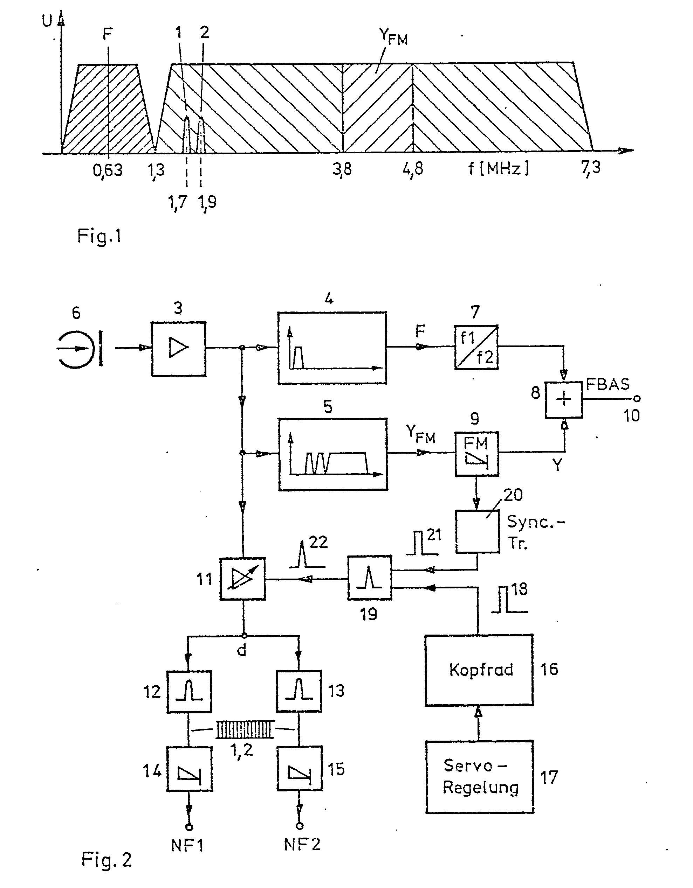

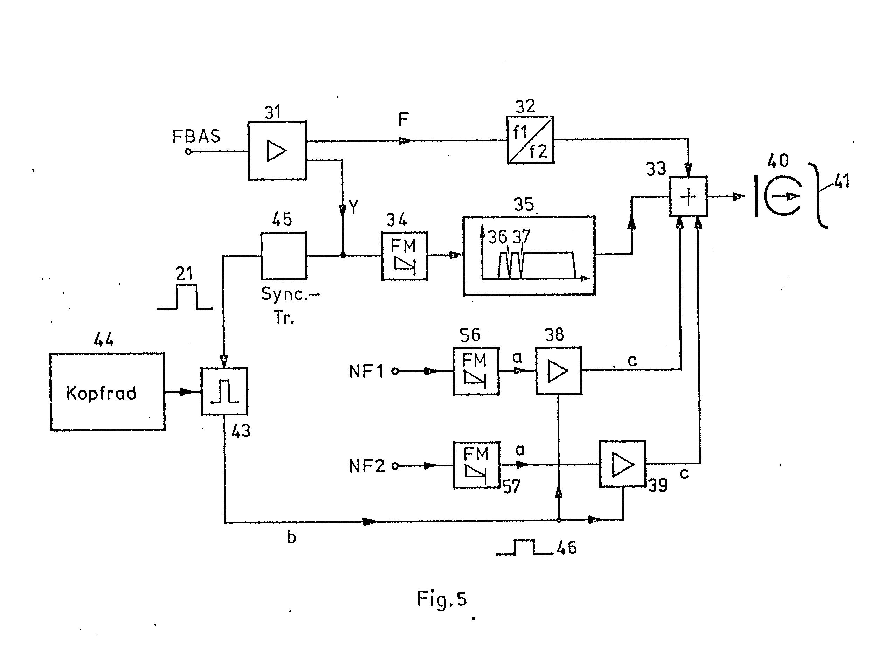

Figur 5-7 ein Ausführungsbeispiel für eine Weiterbildung der Erfindung Gemäß Figur 1 ist auf dem Magnetband im unteren Frequenzbereich ein Farbträger F mit der Frequenz von 0,63 MHz aufgezeichnet, der durch Frequenzherabsetzung aus dem quadraturmodulierten PAL-Farbträger gewonnen ist. Das Videosignal Y ist durch FM eines Bildträgers aufgezeichnet. Dessen statische Modulationskennlinie erstreckt sich zwischen den Frequenzen 3,8 und 4,8 MHz, wobei 3,8 MHz dem Schwarzwert und 4,8 MHz dem Weißwert des Videosignals entspricht. Durch die Modulation ergibt sich ein Frequenzspektrum von 1,3 bis 7,3 MHz. Innerhalb dieses Frequenzspektrums sind bei den Frequenzen 1,7 und 1,9 MHz zwei je mit einem NF-Tonsignal in FM modulierte Tonträger 1,2 aufgezeichnet. Die beiden NF-Tonsignale können ein Stereosignal oder ein Tonsignal in verschiedenen Sprachen darstellen. Die Aufzeichnung dieses Signales auf den Schrägspuren eines Magnetbandes erfolgt mit zwei Videoköpfen, wobei jeweils auf einer Schrägspur ein Halbbild aufgezeichnet ist. Die beiden Videoköpfe sind also bei der Aufzeichnung und bei der Wiedergabe jeweils abwechselnd für ein Halbbild wirksam. Durch den Kopfwechsel entstehen an sich im wiedergegebenen Tonsignal Störungen mit einer Grundfrequenz von 50 Hz. Diese Störungen können auch dann auftreten, wenn die Abtastperioden der beiden Videoköpfe einander überlappen und der Signalweg während dieser Zeit das Signal von beiden Videoköpfen erhält. Je nach Phasenlage der beiden von den Videoköpfen abgetasteten Träger kann es nämlich zu einer Addition dieser Träger und somit einer Amplitudenerhöhung oder auch bei Gegenphase zu einer Auslöschung der Träger und somit zu einem Amplitudeneinbruch kommen.

In Figur 2 wird das abwechselnd mit zwei Videoköpfen abgetastete Signal gemäß Figur 1 über den Verstärker 3 zwei frequenzselektiven Filtern 4,5 zugeführt. Die beiden Videoköpfe sind symbololisch durch den einzigen Videokopf 6 dargestellt. In dem Filter 4 wird der modulierte Farbträger F mit der Frequenz von 0,63 MHz selektiv ausgewertet, in dem Frequenzumsetzer 7 wieder auf die Original-PAL-Farbträgerfrequenz von 4,43 MHz umgewandelt und der Addierstufe 8 zugeführt. In dem Filter 5 wird frequenzselektiv der modulierte Bildträger ausgewertet, der sich von 1,3 bis 7,3 MHz erstreckt, und dem FM-Demodulator 9 zugeführt. Das dadurch gewonnene Videosignal Y wird ebenfalls der Addierstufe 8 zugeführt, die dann an der Klemme 10 das FBAS-Signal liefert. Das Filter 5 enthält zwei Notch-Filter, die die Frequenzen von 1,7 und 1,9 MHz, bei denen die beiden Tonträger liegen, ausfiltern.Dadurch werden Störungen im wiedergegebenen Bild durch die Tonträger 1,2 vermieden.

Das Signal vom Ausgang des Verstärkers 3 gelangt außerdem über den in der Amplitude steuerbaren Verstärker 11 auf die beiden Filter 12,13, die auf die Frequenzen 1,7 und 1,9 MHz abgestimmt sind. Durch die Filter 12,13 werden die beiden modulierten Tonträger 1,2 mit ihren Seitenbändern ausgewertet und FM-Demodulatoren 14,15 zugeführt. Diese liefern an ihren Ausgangsklemmen die beiden niederfrequenten Tonsignale NF1 und NF2.

Figur 2 zeit weiterhin das Kopfrad 16, dessen Geschwindigkeit von der Servo-Regelung 17 in bekannter Weise so geregelt ist, daß die Videoköpfe das Magnetband genau entlang den Schrägspuren abtasten. Vom Kopfrad 16 wird durch permanentmagnete und zugehörige Erregerspulen ein Kopfradimpuls 18 gewonnen, der während jedes Kopfwechsels, also nach jeweils der Abtastung einer Schrägspur, d.h. nach jedem Halbbild, auftritt. Dieser Impuls 18 wird dem Impulsformer 19 zugeführt. Aus dem Videosignal vom Ausgang des Filters 5 wird außerdem in einer Synchron-Abtrennstufe 20 ein Vertikalimpuls 21 gewonnen, der ebenfalls dem Impulsformer 19 zugeführt wird. Der Impuls 18 bestimmt im wesentlichen aufgrund der Drehung des Kopfrades die Frequenz und der Impuls 21 aufgrund des Signals am Ausgang des Filters 5 die richtige Phasenlage des am Ausgang des Impulsformers 19 erzeugten Tastimpulses 22.

Während der Abtastung eines Halbbildes dient der Verstärker 11 als selektiver Verstärker für die beiden modulierten Tonträger 1,2. Während des Kopfwechsels wird die Verstärkung des Verstärkers 11 durch den Tastimpuls 22 so erhöht, daß der Verstärker auf seiner Resonanzfrequenz, d.h. etwa auf der Frequenz der modulierten Tonträger schwingt. Dadurch werden Einbrüche in den den Filtern 12,13 zugeführten Tonträgern vermieden.

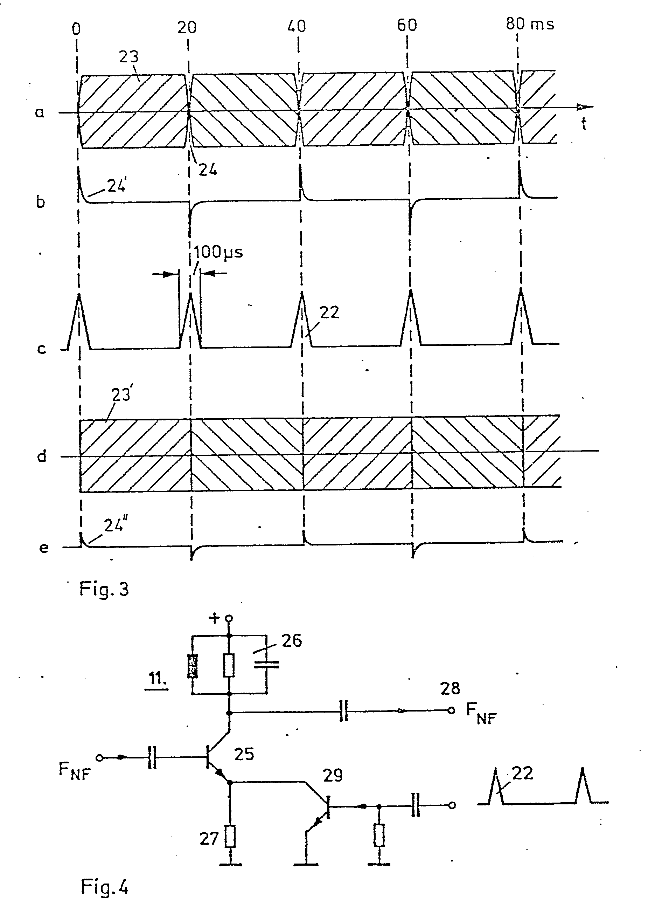

Figur 3a zeigt die einzelnen Trägerpakete 23 für die modulierten Tonträger jeweils für aufeinander folgende Halbbilder, die je eine Dauer von 20 ms haben. Durch den Kopfwechsel entstehen jeweils zwischen zwei Halbbildern, also jeweils nach 20 ms, in den Tonträgern Amplitudeneinbrüche 24. Diese würden an den Ausgängen der Demodulatoren 14,15 nadelförmige Störimpulse 24' gemäß Figur 3b erzeugen. Diese Störimpulse werden bei der wiedergabe des Tones durch ein Knattern mit einer Grundfrequenz von 50 Hz hörbar. Figur 3c zeigt die Tastimpulse 22, durch die die Verstärkung des Verstärkers 11 während der Amplitudeneinbrüche 24 bis zum Schwingen des Verstärkers erhöht wird. Der dreieckförmige Verlauf der Tastimpulse 22 bewirkt eine kontinuierliche Änderung der Verstärkung, um Störungen durch eine zu schnelle Verstärkungsänderung zu vermeiden. Dadurch, daß der Verstärker 11 während des Kopfwechsels schwingt und somit auch während dieser Zeit ein Ausgangssignal liefert, entsteht am Ausgang des Verstärkers 11 ein kontinuierlicher Träger 23' gemäß Figur 3d, der die Amplitudeneinbrüche 24 gemäß Figur 3a nicht mehr aufweist. Nach der Demodulation der so aufbereiteten Tonträger entsteht an den Ausgängen der Demodualtoren 14,15 nur noch ein Störsignal 24" gemäß Figur 3e, dessen Amplitude gegenüber der des Störsignals gemäß Figur 3b etwa auf 10 % verringert ist, was einer Störabstandsverbesserung von 20 dB entspricht. Die Störung aufgrund des Signals gemäß Figur 3e ist praktisch nicht mehr wahrnehmbar.

Figur 4 zeigt ein Schaltungsbeispiel für den selektiven Verstärker 11. Der frequenzmodulierte Tonträger $F_{NF}$ wird der Basis des Transistors 25 zugeführt, der den auf die Tonträgerfrequenz abgestimmten und als Arbeitswiderstand dienenden Schwingkreis 26 und den Gegenkopplungswiderstand 27 aufweist. Der verstärkte Tonträger $F_{NF}$ wird an der Klemme 28 entnommen. Beim normalen Verstärkerbetrieb während der Abtastung einer Schrägspur ist der parallel zum Widerstand 27 geschaltete Transistor 29 gesperrt. Der Widerstand 27 wirkt dann in bekannter Weise als Gegenkopplungswiderstand zur Linearisierung und Verringerung der Verstärkung. Der Transistor 25 arbeitet dann als linearer Verstärker für den modulierten Tonträger. Während des Kopfwechsels ist der Transistor 29 durch die Tastimpulse 22 leitend gesteuert und schließt den Widerstand 27 kurz. Dadurch wird die Gegenkopplung des Verstärkers verringert und die wirksame Verstärkung derart erhöht, daß durch die in der Praxis immer vorhandenen Mitkopplungswege der Verstärker ins Schwingen gerät und an der Klemme 28 während dieser Zeit einen unmodulierten Träger konstanter Amplitude und etwa der Frequenz des modulierten Tonträgers liefert.

Gemäß einer Weiterbildung der Erfindung kann eine weitere Verbesserung dadurch erzielt werden, daß die Amplitude des aufgezeichneten Tonträgers jeweils während des Kopfwechsels durch einen Tastimpuls erhöht ist.

Diese Lösung beruht auf der Erkenntnis, daß durch eine Amplitudenerhöhung des aufgezeichneten Tonträgers während des Kopfwechsels die durch den Kopfwechsel im Tonsignal an sich verursachte Störung beträchtlich verringert werden kann. Diese Amplitudenerhöhung ist deshalb möglich, weil während dieser Zeit keine Bildwiedergabe erfolgt und somit auch keine Störungen im wiedergegebenen Bild auftreten können. Die Amplitudenerhöhung kann sich über mehrere Zeilen, z.B. 6-10 Zeilen vor dem Vertikalsynchronimpuls erstrecken, weil in handelsüblichen Schwarz-Weiß- und Farbfernsehempfängern durch die aus Toleranzgründen notwendige Bildüberschreibung diese Zeilen auf dem Bildschirm nicht sichtbar werden.

Die im Ton an sich durch den Kopfwechsel auftretenden Störungen können durch die oben genannte Maßnahme um etwa 20-30 dB herabgesetzt werden. Zusätzliche schaltungstechnische Maßnahmen bei der Wiedergabe sind nicht notwendig, da sich die Verbesserung zwangsläufig durch die bei der Aufnahme vorgenommene Amplitudenerhöhung des Tonträgers ergibt.

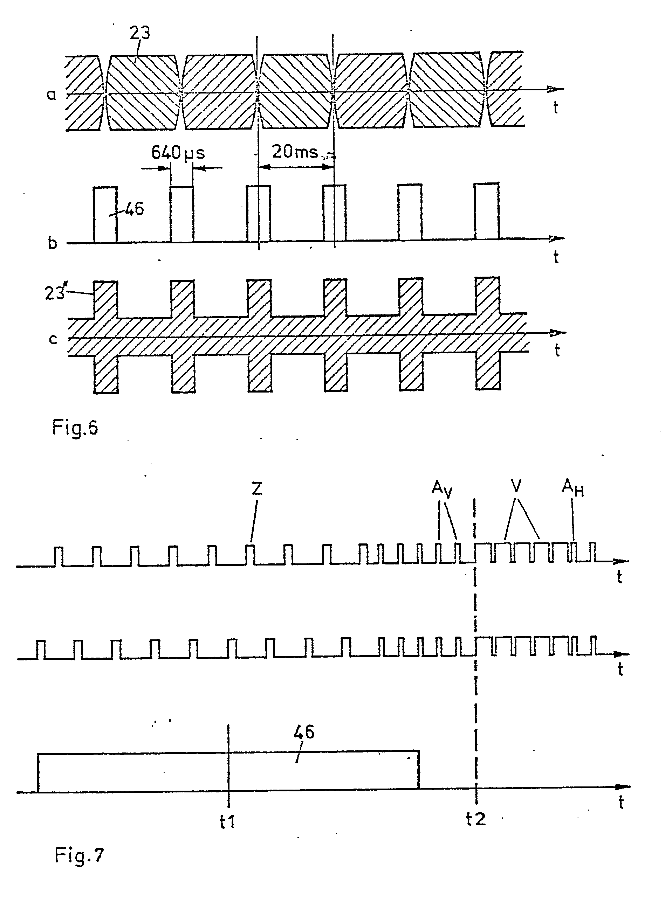

Ein Ausführungsbeispiel für diese Lösung wird anhand der Figuren 5-7 erläutert. Die kleinen Buchstaben zeigen, an welchen Punkten in Figur 5 die Signale gemäß Figur 6 stehen.

In Figur 5 wird das FBAS-Signal in dem Verstärker 31 selektiv in den modulierten PAL-Farbträger F mit einer Frequenz von 4,43 MHz und das Leuchtdichtesignal Y aufgespalten. Der Farbträger wird in dem Frequenzumsetzer 32 auf eine Frequenz von 0,63 MHz herabgesetzt und der Addierstufe 33 zugeführt. Das Leuchtdichtesignal Y erzeugt in dem FM-Modulator 34 den Bildträger, der über das Filter 35 ebenfalls der Addierstufe 33 zugeführt wird. Die Durchlaßkurve des Filters 35 liegt oberhalb des in der Frequenz herabgesetzten Farbträgers und hat zwei Sperrstellen 36,37 bei 1,7 MHz und 1,9 MHz. Zwei Tonsignale NF1 und NF2, die ein Stereosignal oder ein Tonsignal in verschiedenen Sprachen darstellen, werden zwei FM-Modulatoren 56,57 zugeführt, die je einen frequenzmodulierten Tonträger erzeugen. Diese Tonträger bei 1,3 und 1,9 MHz werden über steuerbare Verstärker 38,39 ebenfalls der Addierstufe 33 zugeführt. Die Addierstufe 33 liefert somit den in der Frequenz herabgesetzten Farbträger F, den mit dem Signal Y frequenzmodulierten Bildträger, einen ersten, mit NF1 modulierten Tonträger mit der Frequenz 1,7 MHz und den mit NF2 modulierten Tonträger mit der Frequenz 1 9 MHz. Dieses Signalgemisch am Ausgang der Addierstufe 33 wird mit dem Videokopf 40 auf Schrägspuren des Magnetbandes 41 aufgezeichnet. In der Praxis ist der Videokopf 40 durch zwei mittels einer Kopftrommel rotierende Videoköpfe gebildet, die von Halbbild zu Halbbild abwechselnd das Signal auf Schrägspuren des Magnetbandes 41 aufzeichnen.

Anhand der Figur 6 wird die Steuerung der Amplitude der Tonträger von den Modulatoren 56,57 erläutert. Figur 6a zeigt für aufeinanderfolgende Halbbilder mit je 20 ms die Tonträgerpakete 23 für das von dem Band 41 bei der Wiedergabe abgetastete frequenzmodulierte Signal. Es ist ersichtlich, daß jeweils zwischen zwei Halbbildern im Signal Einbrüche 42 mit einer Wiederholungsfrequenz von 50 Hz auftreten. Diese Einbrüche führen nach der Demodulation im Tonkanal zu nadelförmigen Störungen mit 50 Hz, die sich durch ein Knettern im Ton bemerkbar machen. Figur 5 enthält zusätzlich den Impulsgenerator 43. Dieser wird einerseits durch einen vom Kopfrad 44 abgeleiteten Impuls und andererseits durch einen mittels einer Abtrennstufe 45 aus dem Y-Signal abgeleiteten vertikalfrequenten Impuls 21 gesteuert. Der Impulsgenerator 43 erzeugt an seinem Ausgang jeweils während der Kopfwechsel und der Einbrüche 42 Impulse 46 gemäß Figur 6b mit einer Dauer von 640 us. Diese Impulse gelangen auf die Steuereingänge der Verstärker 38,39 und steuern deren Verstärkung auf den doppelten Wert. Dadurch entstehen aus den beiden modulierten Tonträgern konstanter Amplitude an den Ausgängen der Modulatoren 56 57 Tonträger 23''

gemäß Figur 6c, deren Amplitude während der Dauer der Impulse 46 auf den doppelten Wert erhöht ist. Die Tonträger gemäß Figur 6 c werden dann für die Aufzeichnung verwendet.Die erhöhte Amplitude gemäß Figur 6c während der Einbrüche 42 hat zur Folge, daß die an sich bei der Tonwiedergabe auftretenden Störungen beträchtlich verringert werden.

Figur 7 zeigt die zeitliche Lage der Impulse 46 relativ zum Synchronimpulsgemisch des Videosignals. Dargestellt sind die Zeilensynchronimpulse Z, die vorderen Ausgleichsimpulse $A_v$, die Vertikalsynchronimpulse V und die hinteren Ausgleichsimpulse $A_H$. Der Tastimpuls 46 beginnt etwa 11,5 Zeilen vor dem Beginn t2 der Vertikalsynchronimpulse V, der durch die gestrichelte Linie angedeutet ist. Die Mitte des Tastimpulses liegt beim Zeitpunkt t1, das ist etwa 6,5 Zeilen vor dem Zeitpunkt t2 des Beginns des ersten Vertikalsynchronimpulses V. Der Zeitpunkt t1 ist der Zeitpunkt des Kopfwechsels, in dem z.B. eine Umschaltung der abgetasteten Signale von einem Videokopf auf den anderen Videokopf erfolgt und die beschriebene Störung im Ton auftreten würde.Anfang und Ende des Tastimpulses 46 liegen symmetrisch zum Zeitpunkt t1. Die Gesamtdauer des Tastimpulses 46 beträgt 10 Zeilen, also fünf Zeilen (320 μs) vor t1 und fünf Zeilen nach t1 Die Dauer des Tastimpulses 46 kann auch andereWerte haben, z.B. in der Größenordnung von 300-500 μs. Der schon vor Beginn des Vertikalsynchronimpulses V beginnende Tastimpuls 46 kann folgender-maßen erzeugt werden. Zu Beginn eines Halbbildes mit der Nummer n wird gemäß Figur 5 aus einem vom Kopfrad abgeleiteten Impuls und einem vom Vertikalsynchronimpuls abgeleiteten Impuls ein Impuls erzeugt. Dieser hat zunächst nicht die gewünschte Lage gemäß Figur 7, sondern beginnt erst später. Dieser Impuls wird durch eine Impulsformerstufe oder ein Verzögerungsglied um etwas weniger als die Dauer eines Halbbildes, z.B. um etwa 300 Zeilen verzögert und zu Beginn des Halbbildes n + 1 als Tastimpuls 46 gemäß Figur 7 verwendet. Die zeitliche Lage des Impulses 46 wird so gewählt, daß dieser Impuls auch bei Toleranzen jeweils den Zeitraum um t1 abdeckt, in dem der genannte, die Tonstörung bewirkende nadelförmige Impuls in dem demodulierten Tonsignal bei der Wiedergabe erscheinen würde.

**Patentansprüche**

1. Videorecorder mit verbesserter Tonwiedergabe bei dem ein mit dem Videosignal in FM modulierter Bildträger und ein mit einem NF-Tonsignal modulierter Tonträger (1,2) entlang Schrägspuren des Magnetbandes aufgezeichnet werden und die Abtastung mit mehreren einander abwechselnden Köpfen erfolgt, dadurch gekennzeichnet, daß bei der Wiedergabe der abgetastete Tonträger (1,2) über einen selektiven Verstärker (11) geführt ist, dessen Verstärkung während des Kopfwechsels von einem Tastimpuls (22) so erhöht ist, daß der Verstärker (11) auf seiner Resonanzfrequenz schwingt.

2. Recorder nach Anspruch 1, dadurch gekennzeichnet, daß die Kurvenform des Tastimpulses (22) einen kontinuierlichen Verlauf ohne Amplitudensprünge hat.

3. Recorder nach Anspruch 2, dadurch gekennzeichnet, daß die Kurvenform des Tastimpulses (22) dreieckförmig ist.

4. Recorder nach Anspruch 1, dadurch gekennzeichnet, daß die Dauer des Tastimpulses (22) etwa 100 μs beträgt.

5. Recorder nach Anspruch 1, dadurch gekennzeichnet, daß der Tastimpuls (22) vor dem Kopfwechsel beginnt und nach dem Kopfwechsel endet.

6. Recorder nach Anspruch 1, dadurch gekennzeichnet, daß der Tastimpuls (22) aus einem vom Kopfrad (16) abgeleiteten Impuls (18) gewonnen ist.

7. Recorder nach Anspruch 1, dadurch gekennzeichnet, daß der Tastimpuls (22) aus einem vom Videosignal abgeleiteten Vertikalsynchronimpuls (21) gewonnen ist.

8. Recorder nach Anspruch 1, dadurch gekennzeichnet, daß bei der Aufzeichnung die Amplitude des Tonträgers (Fig. 6c) jeweils während des Kopfwechsels durch einen Tastimpuls (46) erhöht ist (Fig. 5-7).

9. Recorder nach Anspruch 8, dadurch gekennzeichnet, daß die Amplitude etwa um den Faktor 2 erhöht ist (Fig. 5-7).

10. Recorder nach Anspruch 8, dadurch gekennzeichnet, daß der Tastimpuls (46) die Verstärkung eines im Weg des Tonträgers liegenden Verstärkers (38,39) steuert (Fig. 5).

11. Recorder nach Anspruch 8, dadurch gekennzeichnet, daß der Tastimpuls (46) aus einem vom Kopfrad (44) abgeleiteten Kopfwechselimpuls und einem vom Vertikalsynchronimpuls (V) abgeleiteten Impuls gewonnen ist (Fig. 5).

12. Recorder nach Anspruch 8, dadurch gekennzeichnet, daß der Tastimpuls (46) während eines Kopfwechsels durch Verzögerung eines während des zeitlich vorangehenden Kopfwechsels erzeugten Impulses gewonnen ist (Fig. 5).

13. Recorder nach Anspruch 8, dadurch gekennzeichnet, daß der Tastimpuls (46) eine Dauer von ca. 400-600 μs hat.

14. Recorder nach Anspruch 8, dadurch gekennzeichnet, daß der Tastimpuls (46) zeitlich vor dem Vertikalsynchronimpuls (V) des Videosignals liegt (Fig. 7).

15. Recorder nach Anspruch 8, dadurch gekennzeichnet, daß der Anfang und das Ende des Tastimpulses (46) symmetrisch zum Zeitpunkt (t1) des Kopfwechsels liegen (Fig. 7).

16. Recorder nach Anspruch 15, dadurch gekennzeichnet, daß die Mitte der Dauer des Tastimpulses (46) etwa 6,5 Zeilen vor dem Beginn (t2) des ersten Vertikalsynchronimpulses (V) liegt (Fig. 7).

## Claims

1. Video recorder having improved sound reproduction in which a picture carrier modulated in frequency by the video signal and a sound carrier (1,2) modulated with a low frequency sound signal are recorded along slanting tracks of the magnetic tape, and the pick up takes place using several heads switching from one to another, <u>characterized in that,</u> upon the reproduction, the picked-up sound carrier (1,2) is conducted by way of a selective amplifier (11), the amplification of which is so increased by a keying pulse (22) during the head switch over that the amplifier (11) oscillates at its resonant frequency.

2. Recorder according to Claim 1,<u>characterized in that</u> the waveform of the keying pulse (22) has a continuous flow without sudden transitions in amplitude.

3. Recorder according to Claim 2,<u>characterized in that</u> the waveform of the keying pulse (22) is triangular.

4. Recorder according to Claim 1,<u>characterized in that</u> the duration of the keying pulse (22) is about 100 μs.

5. Recorder according to Claim 1,<u>characterized in that</u> the keying pulse (22) begins before the head switch over and ends after the head switch over.

6. Recorder according to Claim 1,<u>characterized in that</u> the keying pulse (22) is produced from a pulse derived from the head wheel (16).

7. Recorder according to Claim 1,<u>characterized in that</u> the keying pulse (22) is produced from a vertical synchronizing pulse (21) derived from the video signal.

8. Recorder according to Claim 1, <u>characterized in that</u> upon the recording the amplitude of the sound carrier (Fig. 6c) is increased each time during the head switch over by means of a keying pulse (46) (Fig. 5-7).

9. Recorder according to Claim 8, <u>characterized in that</u> the amplitude is increased by the factor of about 2. (Fig. 5-7).

10. Recorder according to Claim 8, <u>characterized in that</u> the keying pulse (46) controls the amplification of an amplifier (38,39) in the path of the sound carrier (Fig. 5).

11. Recorder according to Claim 8, <u>characterized in that</u> the keying pulse (46) is produced from a head switch over pulse derived from the head wheel (44) and from a pulse derived from the vertical synchronizing pulse (V) (Fig. 5).

12. Recorder according to Claim 8, <u>characterized in that</u> the keying pulse (46) is produced during a head switch over by delay of a pulse derived during the preceding head switch over (Fig. 5).

13. Recorder according to Claim 8, <u>characterized in that</u> the keying pulse (46) has a duration of about 400-600 μs.

14. Recorder according to Claim 8, <u>characterized in that</u> the keying pulse (46) is timed to occur before the vertical synchronizing pulse (V) of the video signal.

15. Recorder according to Claim 8, <u>characterized in that</u> the beginning and the end of the keying pulse (46) occurs symmetrically with respect to the instant (t1) of the head switch over (Fig. 7).

16. Recorder according to Claim 15, <u>characterized in that</u> the middle of the duration of the keying pulse (46) occurs about 6.5 lines before the beginning (t2) of the first vertical synchronizing pulse (V) (Fig. 7).

## Revendications

1. Magnétoscope à reproduction sonore améliorée, dans lequel une porteuse image modulée en fréquence avec le signal vidéo et une porteuse son (1, 2) modulée avec un signal audio NF sont enregistrées le long de pistes en oblique de la bande magnétique et l'analyse est effectuée avec plusieurs têtes alternant mutuellement, caractérisé en ce que que, lors de la reproduction, la porteuse son analysée (1, 2) est transmise par l'intermédiaire d'un amplificateur sélectif (11) dont l'amplification est augmentée pendant le changement de têtes par une impulsion de déclenchement (22) de telle sorte que l'amplificateur (11) oscille à sa fréquence de résonance.

2. Magnétoscope selon la revendication 1, caractérisé en ce que la forme de courbe de l'impulsion de déclenchement (22) a un profil continu sans sauts d'amplitude.

3. Magnétoscope selon la revendication 2, caractérisé en ce que la forme de courbe de l'impulsion de déclenchement (22) est triangulaire.

4. Magnétoscope selon la revendication 1, caractérisé en ce que la durée de l'impulsion de déclenchement (22) s'elève à environ 100 μs.

5. Magnétoscope selon la revendication 1, caractérisé en ce que l'impulsion de déclenchement (22) commence avant le changement de têtes et se termine après le changement de têtes.

6. Magnétoscope selon la revendication 1, caractérisé en ce que l'impulsion de déclenchement (22) est obtenue à partir d'une impulsion (18) provenant de la roue porte-têtes (16).

7. Magnétoscope selon la revendication 1, caractérisé en ce que l'impulsion de déclenchement (22) est obtenue à partir d'une impulsion de synchronisation verticale (21) dérivée du signal vidéo.

8. Magnétoscope selon la revendication 1, caractérisé en ce que, lors de l'enregistrement, l'amplitude de la porteuse son (figure 6c) est augmentée à chaque fois pendant le changement de têtes par une impulsion de déclenchement (46) (figures 5 - 7).

9. Magnétoscope selon la revendication 8, caractérisé en ce que l'amplitude est augmentée approximativement du facteur 2 (figures 5-7).

10. Magnétoscope selon la revendication 8, caractérisé en ce que l'impulsion de déclenchement (46) commande l'amplification d'un amplificateur (38, 39) placé dans le trajet de la porteuse son.

11. Magnétoscope selon la revendication 8, caractérisé en ce que l'impulsion de déclenchement (46) est obtenue à partir d'une impulsion de changement de têtes provenant de la roue portetêtes (44) et d'une impulsion dérivée de l'impulsion de synchronisation verticale V (figure 5).

12. Magnétoscope selon la revendication 8, caractérisé en ce que l'impulsion de déclenchement (46) est obtenue pendant un changement de têtes, par retardement d'une impulsion produite pendant le changement de têtes qui s'est produit auparavant (figure 5).

13. Magnétoscope selon la revendication 8, caractérisé en ce que l'impulsion de déclenchement (46) a une durée d'environ 400 à 600 μs.

14. Magnétoscope selon la revendication 8, caractérisé en ce que l'impulsion de déclenchement (46) est placée temporellement avant l'impulsion de synchronisation verticale V du signal vidéo (figure 7).

15. Magnétoscope selon la revendication 8, caractérisé en ce que le début et la fin de l'impulsion de déclenchement (46) sont placés symétriquement par rapport à l'instant (t1) du changement de têtes (figure 7).

16. Magnétoscope selon la revendication 15, caractérisé en ce que le milieu de la durée de l'impulsion de déclenchement (46) est placé à environ 6,5 lignes avant la début (t2) de la première impulsion de synchronisation verticale (V) (figure 7).

Fig.1

Fig. 2

2/4

Fig. 3

Fig. 4

314

Fig. 5

414

Fig.6

Fig.7